# EUROPÄISCHE PATENTSCHRIFT

(11) **EP 2 055 166 B1**
(45) Veröffentlichungstag und Bekanntmachung des Hinweises auf die Patenterteilung: **05.05.2010**
(21) Anmeldenummer: 08018141.5
(22) Anmeldetag: 16.10.2008
(51) Int. Cl.: A01C 7/20

(54) **Saatgut- und/oder Düngerverteilmaschine**
Seeds and/or fertiliser distributor machine
Machines de distribution de semences et/ou d'engrais

(30) Priorität: 05.11.2007 DE 102007053001
(43) Veröffentlichungstag der Anmeldung: 06.05.2009
(73) Patentinhaber: Kverneland ASA, 4355 Kvernaland (NO)
(72) Erfinder: Friel, Holger, 19288 Glaisin (DE)
(74) Vertreter: Schweiger, Johannes

(56) Entgegenhaltungen:
- EP-A- 0 313 834
- EP-A- 1 529 432
- EP-A- 1 634 489
- NL-C- 60 255

## Beschreibung

Die Erfindung betrifft eine Saatgut- und/oder Düngerverteilmaschine zur Einbringung von Saatgut und/oder Dünger in einen Ackerboden mit folgenden Merkmalen:
- mindestens ein, insbesondere einklappbarer, Säelementschienenrahmen zur Aufnahme mehrerer, schwenkbar mit dem Säelementschienenrahmen verbundener Säelemente und
- die Säelemente sind über Energieübertragungs- und Speichermittel in Richtung Ackerboden mit einer Zugkraft beaufschlagbar.

Grundsätzlich bestehen Verteilmaschinen aus einem Grundrahmen und/oder Basisgestell, das einen Vorratsbehälter für Saatgut/Dünger mit möglichst großem Volumen trägt. An dem Basisgestell sind quer zur Fahrtrichtung Säeiemente, beispielsweise Säschare an einem Säelementschienenrahmen aufgereiht, wobei der Säelementschienenrahmen zum Transport in eine der Straßenverkehrsordnung entsprechende Transportstellung zusammengeklappt/-geschwenkt werden muss, wenn die Arbeitsbreite größer als die zulässige Transportbreite ist. Zur Zeit müssen in einigen Ländern eine maximale Höhe von vier Metern und eine maximale Breite von drei Metern eingehalten werden.

Die Saatgut- und/oder Düngerverteilmaschine kann zum Anbau im Dreipunkt des Schleppers oder als Anhängernaschine mit eigenem Fahrwerk ausgeführt sein.

Die Säelemente sind am Säelementschienenrahmen schwenkbar angeschlagen und weisen über mit dem Säelementschienenrahmen verbundene Zugfedern eine Vorspannung in Richtung des Ackerbodens auf, so dass die Säelemente bei der Bestellung des Ackers nicht nur durch ihr Eigengewicht in diesen eindringen. Die Vorspannung der Zugfedern kann durch einen Mechanismus verstellt werden. Der Mechanismus kann verstellt werden, um unterschiedlich hohe Säelementdrücke bzw. Säelementkräfte in Richtung des Ackerbodens zu erreichen und damit die Ablagetiefe des Saatguts und/oder Düngers zu beeinflussen. Die Säelemente weisen meist Andruck-/Tiefenführungsrollen auf, wodurch die maximale Eindringtiefe in den Boden definiert wird. Die Eindringkraft / der Säelementdruck, die/der zum Überwinden der entsprechenden Gegenkraft des Bodens erforderlich ist, hängt unter anderem von der Beschaffenheit des Bodens, der Geometrie der Säelemente sowie der Fahrgeschwindigkeit ab.

Bei den bekannten Verteilmaschinen wird der Säelementdruck/die Säelementkraft für jede Teilbreite des Säelementschienenrahmens manuell über eine Spindel oder Hydraulikzylinder als Fernbetätigung eingestellt.

Die oben beschriebenen pneumatischen Verteilmaschinen oder Einzelkornsämaschinen können sehr große Arbeitsbreiten aufweisen, die das zulässige Maß (Höhe: 4m; Breite: 3m) zum Teil deutlich überschreiten und daher zum Transport auf öffentlichen Straßen entsprechend zusammengeklappt werden müssen.

Durch den Klappmechanismus stehen die Säelemente in der Transportstellung der Verteilmaschine jeweils seitlich nach außen von dem Vorratsbehälter ab, soweit dies etwaige Tiefenanschläge zulassen.

Darüber hinaus werden Vorratsbehälter mit immer größeren Volumina gefordert, um die Füllzeiten zu minimieren. Bedingt durch die obigen absoluten Abmessungsbegrenzungen besteht ein erheblicher Bedarf, den Klappmechanismus zu optimieren und bei gleicher oder größerer Arbeitsbreite ein möglichst großes Vorratsbehältervolumen zuzulassen.

Solche Sämaschinen sind in der EP-A-1 634 489, EP-A-1 529 432, NL 60 255 C und der EP-A-0 313 834 gezeigt.

Aufgabe der vorliegenden Erfindung ist es daher, mit möglichst einfachen und kostengünstigen Mitteln die Verteilmaschinen dahingehend zu optimieren, dass einerseits die zulässigen Abmessungen eingehalten werden und andererseits bei gleicher oder größerer Arbeitsbreite ein möglichst großes Vorratsbehältervolumen ermöglicht wird.

Grundidee der vorliegenden Erfindung ist es dabei, die für den Säelementdruck jedes Säelements zuständige Zugfeder so auszugestalten, dass Sie beim Einklappen und/oder Anheben der Säelemente als Druckstange einsetzbar ist, um die Säelemente in eingeklapptem Zustand der pneumatischen Verteilmaschine oder Einzelkornsämaschine nach innen zu drücken. Hierdurch werden die Außenabmessungen der Verteilmaschine im zusammengeklappten Zustand ohne zusätzliche Hilfsmittel minimiert.

Mit anderen Worten ausgedrückt übernimmt die Zugfeder eine weitere Funktion durch Änderung der Geometrien und/oder Verstellwege der Zugfeder am Säelementschienenrahmen oder einem am Säelementschienenrahmen angebrachten Betätigungsmittel.

Darüber hinaus kann durch die Ausgestaltung der Zugfeder als Druckstange das Anheben der Säelemente auf dem Vorgewende statt durch Anheben des gesamten Säelementrahmens durch Anheben der Säelemente mittels der Zugfeder als Druckstange erfolgen. Hierdurch wird das Anheben der Säelemente auf dem Vorgewende vereinfacht. Es werden daher zwei technische Probleme mit der obigen Erfindung gelöst und auch Verteilmaschinen kleinerer Arbeitsbreite und ohne Klappmechanismus profitieren von der erfindungsgemäßen Lösung.

Die Erfindung betrifft daher als eigenständige Erfindung auch eine Verwendung einer Zugfeder als Druckstange, insbesondere im Zusammenhang mit dem Klappmechanismus einer gattungsgemäßen Saatgut- und/oder Düngerverteilmaschine zur Einbringung von Saatgut und/oder Dünger in einen Ackerboden und/oder im Zusammenhang mit dem Anheben der Säelemente auf dem Vorgewende.

Ein entscheidender Vorteil der Erfindung besteht darin, dass die Säschare mittels der über die Zugfeder übertragenen Druckkraft so eingeschwenkt werden können, dass die Außenabmessungen der Verteilmaschine minimiert werden und damit beispielsweise größere Vorratsbehälter zum Einsatz gebracht werden können und/oder größere Arbeitsbreiten realisiert werden können.

Weiterhin ist von Vorteil, dass übliche Zugfedern verwendet werden können. Soweit vorstehend von Zugfedern die Rede ist, sind allgemein Energieübertragungs- und Speichermittel gemeint.

Die erfindungsgemäße Aufgabe wird mit den Merkmalen des Patentanspruchs 1 gelöst, wobei vorteilhafte Weiterbildungen der Erfindung in den Unteransprüchen angegeben sind. In den Rahmen der Erfindung fallen auch sämtliche Kombinationen aus zumindest zwei von in der Beschreibung, den Ansprüchen und/oder den Figuren offenbarten Merkmalen.

Mit Vorteil ist bei der Erfindung vorgesehen, dass der Säelementschienenrahmen von einer Arbeitsstellung in eine Wendestellung und weiter in eine Transportstellung schwenkbar/klappbar ist, wobei die Säschare in der Arbeitsstellung mit Zugkraft und in der Transportstellung und/oder der Wendestellung mit Druckkraft beaufschlagt/beaufschlagbar sind.

In einer Ausführungsform der Erfindung ist weiter vorgesehen, dass der Säelementschienenrahmen in der Arbeitsstellung quer zur Fahrtrichtung R der Verteilmaschine angeordnet ist.

Durch eine am Säelementschienenrahmen angebrachte Säelementverstelleinrichtung zur Verstellung der auf die Säelemente, insbesondere Säschare, in Richtung Ackerboden durch die Energieübertragungs- und Speichermittel wirkenden Zugkraft ist es mit Vorteil möglich, unterschiedlich hohe Schardrücke bzw. Scharkräfte in Richtung des Ackerbodens zu erreichen und damit die Eindringtiefe / Ablagetiefe des Saatguts und/oder Düngers zu beeinflussen.

In einer weiteren vorteilhaften Ausgestaltung der Erfindung sind die Energieübertragungs- und Speichermittel als Zugfedern ausgebildet, wobei für jedes Säelement mindestens eine Zugfeder vorgesehen ist. Durch Ausübung einer Druckkraft bei vollständig komprimierten Zugfedern besteht der Vorteil, dass die Säelemente stabil in ihrer Position gehalten werden.

Durch die konkrete, vorteilhafte Ausgestaltung der Erfindung, in der die Säelementverstelleinrichtung eine parallel mit dem Säelementschienenrahmen verbundene Verstellwelle aufweist, an der die Energieübertragungs- und Speichermittel mit ihrem ersten Ende außerhalb einer Rotationsachse der Verstellwelle zur Verstellung der Zugkraft durch Rotation der Verstellwelle um die Rotationsachse eingehängt sind, wobei die Energieübertragungs- und Speichermittel jeweils mit ihrem zweiten Ende am korrespondierenden Säelement, insbesondere drehbar, angeschlagen sind, ist die gleichmäßige Übertragung der Zug- und/oder Druckkräfte auf die einzelnen Säelemente beispielsweise mit einem einzigen oder wenigen, zentral gesteuerten Hydraulikzylindern oder ähnlichen, kontrolliert hin- und herbewegbaren Betätigungsmitteln möglich. Mit anderen Worten ist eine exzentrische Anbringung der Energieübertragungs- und Speichermittel an der Verstellwelle optimal, um sowohl die Zug- als auch die Druckkräfte exakt einzustellen.

In einer weiteren vorteilhaften Ausgestaltung der Erfindung ist vorgesehen, dass an der Verstellwelle Betätigungsmittel zur Übertragung der Druckkraft durch Rotation der Verstellwelle über die Energieübertragungs- und Speichermittel auf die Säelemente vorgesehen sind.

Die Betätigungsmittel können gleichzeitig als Druck- und/oder Zugkraft übertragende Betätigungsmittel ausgebildet sein, indem an den Betätigungsmitteln die ersten Enden der Zugfeder eingehängt sind.

Weitere Vorteile, Merkmale und Einzelheiten der Erfindung ergeben sich aus der nachfolgenden Beschreibung bevorzugter Ausführungsbeispiele sowie an Hand der Zeichnungen. Diese zeigen in:
- Fig. 1:: eine ausschnittsweise schematische Seitenansicht der Saatgut- und/oder Düngerverteilmaschine in einer Arbeitsstellung der Säschare und
- Fig. 2:: eine ausschnittsweise schematische Seitenansicht der Saatgut- und/oder Düngerverteilmaschine in einer Wende- oder Transportstellung der Säschare.

In den Figuren sind gleiche Bauteile und Bauteile mit der gleichen Funktion mit den gleichen Bezugszeichen gekennzeichnet.

Der grundsätzliche Aufbau einer erfindungsgemäßen Saatgut- und/oder Düngerverteilmaschine, im Folgenden der Einfachheit halber als Verteilmaschine bezeichnet, ist nicht dargestellt und wird als bekannt vorausgesetzt. Die Fahrtrichtung R der Verteilmaschine ist in der Zeichnungsebene der Figuren nach links. Im Ausführungsbeispiel ist die Erfindung an Hand einer pneumatischen Verteilmaschine gezeigt. Genauso ist die Erfindung auf eine Einzelkornsämaschine anwendbar.

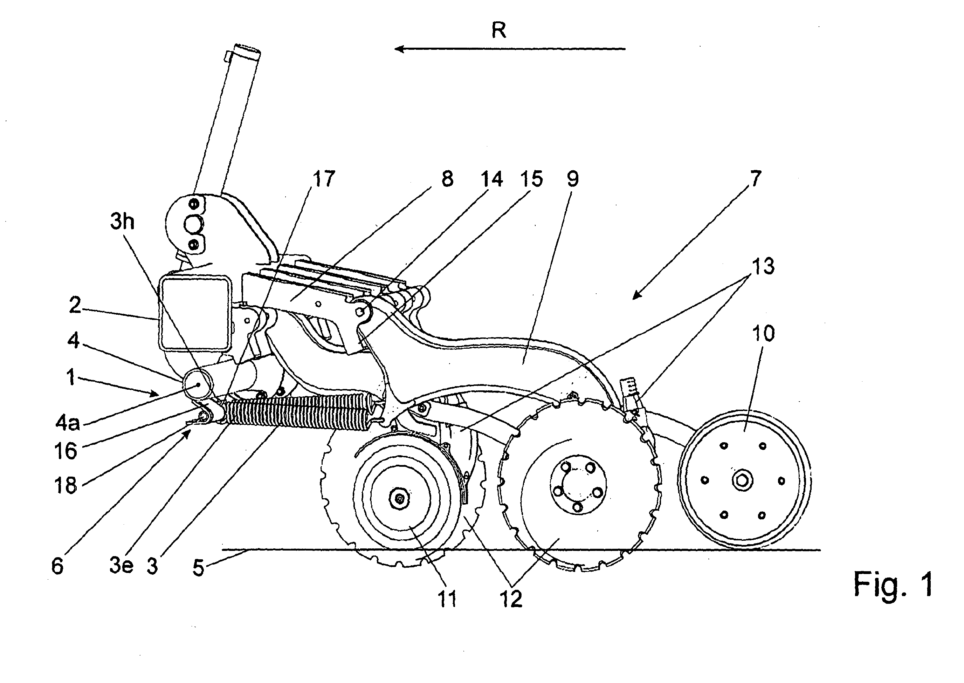

In Figur 1 sind zwei an einem Säelementschienenrahmen 2 montierte Säelemente, hier konkret Säschare 7 dargestellt, wobei weitere, nicht dargestellte Säschare 7 an dem nur ausschnittsweise dargestellten Säelementschienenrahmen 2 aufgereiht sind und die Arbeitsbreite der den Säelementschienenrahmen 2 aufnehmenden Saatgut- und/oder Düngerverteilmaschine von der Breite des Säelementschienenrahmens 2 abhängt. Soweit mehrere Säelementschienenrahmen 2 an der Verteilmaschine angeordnet sind, summiert sich die Arbeitsbreite der Verteilmaschine aus der Anzahl und Breite der Säelementschienenrahmen 2.

Eines der beiden gezeigten Säschare 7 ist in Fahrtrichtung R nach vorne versetzt seitlich neben dem in der Zeichnungsebene rechts angeordneten Säschar 7 an dem Säelementschienenrahmen 2 angebracht.

Das rechte Säschar 7 besteht aus einem Träger 9, an dessen hinterstem Ende eine Tiefenführungsrolle 10 angebracht ist. In Fahrtrichtung R vor der Tiefenführungsrolle 10 sind die Scharscheiben 11, 12 an dem Träger 9 angebracht, die besser an dem in Fahrtrichtung R weiter vorne angeordneten Säschar 7 zu erkennen sind. Zwischen den beiden Scharscheiben 11, 12 wird das Saatgut über ein Saatgutrohr 13 in den Ackerboden 5 eingebracht.

In einem vorderen oberen Bereich des Trägers 9 ist dieser schwenkbar mit einem Lager 14 eines Haltearms 8 des Säelementschienenrahmens 2 verbunden. Der Haltearm 8 weist im Bereich des Lagers 14 und unterhalb des Lagers 14 einen Anschlag 15 auf, der als Anschlag für den Träger 9 und damit das Säschar 7 dient und somit die maximale Auslenkung des Säschars 7 nach unten definiert.

Unterhalb und versetzt zu dem Lager 14 und dem Anschlag 15 ist das Säschar 7 in einem unteren Bereich des Trägers 9 über eine Zugfeder 3 mit einer Säelementverstelleinrichtung 1 verbunden. Je nach Vorspannung der Zugfeder 3, die durch die Säelementverstelleinrichtung 1 eingestellt werden kann, wird das Säschar 7 durch das auf dem Träger 9 wirkende, durch die Zugfeder erzeugte Drehmoment in Richtung des Ackerbodens 5 gezogen, bis maximal zu der durch den Anschlag 15 definierten Auslenkung.

Die Säelementverstelleinrichtung 1 dient zur Verstellung der Länge der Zugfeder 3, wodurch sich die Vorspannung der Zugfeder 3 und entsprechend der Schardruck ändert. Die Säelementverstelleinrichtung 1 besteht aus einer Verstellwelle 4, die über einen gesteuerten Antrieb rotierbar ist und einem Betätigungsmittel 6, das exzentrisch zu einer Rotationsachse 4a der Verstellwelle 4 angeordnet ist und die rotatorische Bewegung der Verstellwelle 4 in eine translatorische Bewegung umsetzt.

Die Säelementverstelleinrichtung 1 ist unterhalb des Säelementschienenrahmens 2 angeordnet und die Rotationsachse 4a der Verstellwelle 4 verläuft parallel zu dem Säelementschienenrahmen 2.

Die Betätigungsmittel 6 sind durch im Querschnitt V-förmige Halterungen 16 gebildet, wobei auch zwei oder mehrere im Querschnitt V-förmige, in Richtung der Rotationsachse 4a voneinander beabstandete Halterungen 16 denkbar sind. Durch die Beabstandung wird ein Spalt 17 gebildet, in welchen das erste Ende 3e der Zugfeder 3, zumindest aber ein Haken 3h des ersten Endes 3e der Zugfeder 3 einführbar ist. Bei der erstgenannten, in den Figuren gezeigten Ausgestaltung der Halterungen 16 erstreckt sich der Spalt 17 nur über eine Teilbreite jeder der Halterungen 16, bildet demnach einen in Querrichtung der Halterung 16 verlaufenden Schlitz.

Der Haken 3h wird durch einen Stift 18 auf Zug gehalten, wobei der Stift 18 in dem durch die V-Form der Halterungen 16 gebildeten Knie bzw. der Kniekehle anliegt.

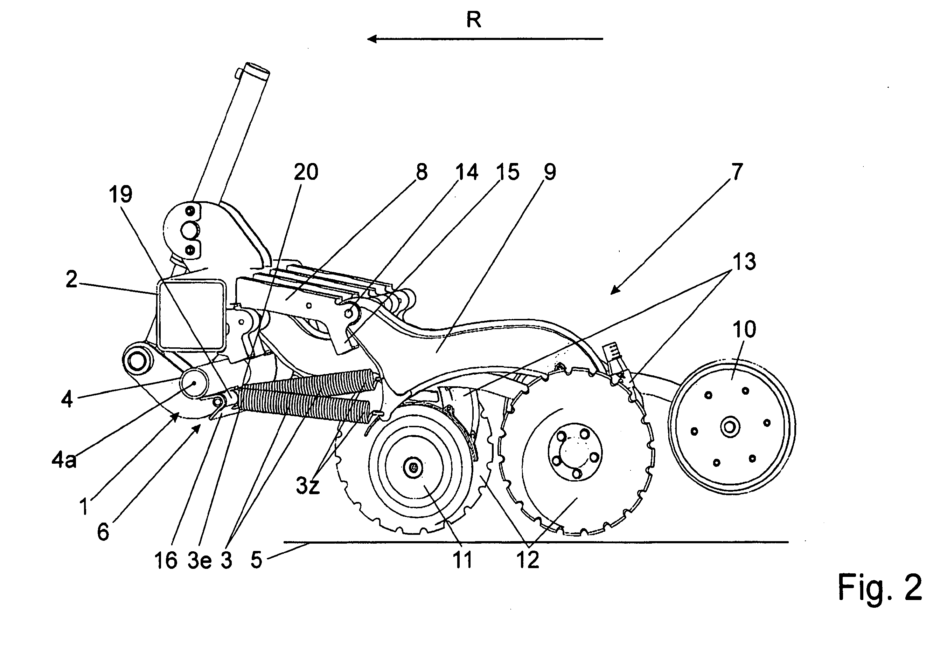

In Fig. 2 ist der in Fig. 1 dargestellte und oben beschriebene Ausschnitt der Verteilmaschine in einer Wende- bzw. Transportstellung dargestellt. Die Säschare 7 können allein durch die besondere Ausgestaltung der Scharverstellung 1 sowie der Zugfedern 3 angehoben werden. Besonders vorteilhaft ist diese Möglichkeit in einer Transportstellung der Verteilmaschine, in der der Säelementschienenrahmen 2 seitlich neben einen hier nicht dargestellten Vorratsbehälter geklappt ist, wobei die Säschare üblicherweise seitlich von dem Vorratsbehälter aufgereiht sind und die Scharscheiben 11, 12 von dem Vorratsbehälter weg zeigen. In dieser Transportstellung kann durch die in Fig. 2 gezeigte Stellung der Säelementverstelleinrichtung 1 erreicht werden, dass die Säschare 7 nach innen gedrückt werden, das heißt in Richtung des Vorratsbehälters, wodurch die Außenabmessungen der Verteilmaschine reduziert werden.

Die V-förmige Halterung 16 bildet nämlich mit ihrem Knie 19 gleichzeitig eine Schulter, an der sich die Zugfeder 3 mit ihrer ersten Windung 20 abstützen kann, sobald die Zugfeder 3 vollständig komprimiert ist, wie in Fig. 2 dargestellt. Die Säschare 7 werden demnach nicht nur näher zu dem Vorratsbehälter der Verteilmaschine gedrückt, sondern werden dort auch stabil gehalten und schwanken weniger hin und her als bei bisher bekannten Verteilmaschinen. Dies kommt außerdem der Fahrsicherheit auf den häufig unebenen Strecken zugute.

### Bezugszeichenliste

- 1: Säelementverstelleinrichtung
- 2: Säelementschienenrahmen
- 3: Zugfeder
- 3e: Erstes Ende
- 3z: Zweites Ende
- 3h: Haken
- 4: Verstellwelle
- 4a: Rotationsachse
- 5: Ackerboden
- 6: Betätigungsmittel
- 7: Säschare
- 8: Haltearm
- 9: Träger
- 10: Tiefenführungsrolle
- 11: Scharscheibe
- 12: Scharscheibe
- 13: Saatgutrohr
- 14: Lager
- 15: Anschlag
- 16: Halterung
- 17: Spalt
- 18: Stift
- 19: Knie
- 20: Erste Windung

## Patentansprüche

1. Saatgut- und/oder Düngerverteilmaschine zur Einbringung von Saatgut und/oder Dünger in einen Ackerboden (5) mit folgenden Merkmalen:
- mindestens ein Säelementschienenrahmen (2) zur Aufnahme mehrerer, schwenkbar mit dem Säelementschienenrahmen (2) verbundener Säelemente (7) und
- die Säelemente (7) sind über Energieübertragungs- und Speichermittel in Richtung Ackerboden (5) mit einer Zugkraft und mit einer entgegen der Zugkraft gerichteten Druckkraft beaufschlagbar,
**dadurch gekennzeichnet, dass**
die Energieübertragungs- und Speichermittel durch als Druckstangen zum Anheben der Säelemente (7) einsetzbare Zugfedern (3) gebildet sind.

2. Saatgut- und/oder Düngerverteilmaschine nach Anspruch 1,
**dadurch gekennzeichnet,**
**dass** der Säelementschienenrahmen (2) von einer Arbeitsstellung in eine Wendestellung und weiter in eine Transportstellung schwenkbar/klappbar ist, wobei die Säelemente (7) in der Arbeitsstellung mit Zugkraft und in der Transportstellung und/oder der Wendestellung mit Druckkraft beaufschlagt sind.

3. Saatgut- und/oder Düngerverteilmaschine nach Anspruch 2,
**dadurch gekennzeichnet,**
**dass** der Säelementschienenrahmen (2) in der Arbeitsstellung quer zur Fahrtrichtung R der Verteilmaschine angeordnet ist.

4. Saatgut- und/oder Düngerverteilmaschine nach einem der vorhergehenden Ansprüche, **dadurch gekennzeichnet,**
**dass** eine am Säelementschienenrahmen (2) angebrachte Säelementverstelleinrichtung (1) zur Verstellung der auf die Säelemente (7) in Richtung Ackerboden (5) durch die Zugfedern (3) wirkenden Zugkraft vorgesehen ist.

5. Saatgut- und/oder Düngerverteilmaschine nach einem der vorhergehenden Ansprüche, **dadurch gekennzeichnet,**
**dass** für jedes Säelement (7) mindestens eine Zugfeder (3) vorgesehen ist.

6. Saatgut- und/oder Düngerverteilmaschine nach einem der vorhergehenden Ansprüche, **dadurch gekennzeichnet,**
**dass** die Säelementverstelleinrichtung (1) eine parallel mit dem Säelementschienenrahmen (2) verbundene Verstellwelle (4) aufweist, an der die Zugfedern (3) mit ihrem ersten Ende (3e) außerhalb einer Rotationsachse (4a) der Verstellwelle (4) zur Verstellung der Zugkraft durch Rotation der Verstellwelle (4) um die Rotationsachse (4a) eingehängt sind, wobei die Zugfedern (3) jeweils mit ihrem zweiten Ende (3z) am korrespondierenden Säelement (7), insbesondere drehbar, angeschlagen sind.

7. Saatgut- und/oder Düngerverteilmaschine nach Anspruch 6
**dadurch gekennzeichnet,**
**dass** an der Verstellwelle (4) Betätigungsmittel (6) zur Übertragung der Druckkraft durch Rotation der Verstellwelle über die Zugfedern (3) auf die Säschare (7) vorgesehen sind.

8. Saatgut- und/oder Düngerverteilmaschine nach Anspruch 6 und 7, **dadurch gekennzeichnet,**
**dass** an den Betätigungsmitteln (6) die ersten Enden (3e) der Zugfedern (3) eingehängt sind.

9. Verwendung einer Zugfeder als Druckstange zur Druckbeaufschlagung eines Säelements in einer Transportstellung und/oder Wendestellung entgegen einer Zugbeaufschlagung des Säelements durch die Zugfeder in einer Arbeitsstellung.

## Claims

1. Seed- and/or fertilizer-distributing machine for applying seed and/or fertilizer to soil (5) with the following features:
- At least one sowing element rail frame (2) for accommodating several sowing elements (7) that are connected in a pivotable manner to the sowing element rail frame (2), and
- The sowing elements (7) can be subjected to pressure via energy transfer and storage means in the direction of the soil (5) with a tensile force and with a compressive force directed against the tensile force,
**characterized in that**
the energy transfer and storage means are formed by tension springs (3) that can be used as pressure rods for raising the sowing elements (7).

2. Seed- and/or fertilizer-distributing machine according to claim 1, wherein the sowing element rail frame (2) can be pivoted/folded from a working position into a reversing position and then into a transporting position, whereby the sowing elements (7) are subjected to pressure in the working position with tensile force and in the transporting position and/or the reversing position with compressive force.

3. Seed- and/or fertilizer-distributing machine according to claim 2, wherein the sowing element rail frame (2) in the working position is arranged crosswise to the direction of travel R of the distributing machine.

4. Seed- and/or fertilizer-distributing machine according to one of the preceding claims, wherein a sowing element adjusting device (1) that is applied to the sowing element rail frame (2) is provided for adjusting the tensile force acting on the sowing elements (7) in the direction of the soil (5) by the tension springs (3).

5. Seed- and/or fertilizer-distributing machine according to one of the preceding claims, wherein at least one tension spring (3) is provided for each sowing element (7).

6. Seed- and/or fertilizer-distributing machine according to one of the preceding claims, wherein the sowing element adjusting device (1) has a setting shaft (4) that is connected in parallel to the sowing element rail frame (2) and to which the tension springs (3) are suspended at their first end (3e) outside of an axis of rotation (4a) of the setting shaft (4) to adjust the tensile force by rotation of the setting shaft (4) around the axis of rotation (4a), whereby the tension springs (3) strike, in particular in a rotatable manner, the corresponding sowing element (7) in each case at the second end (3z) thereof.

7. Seed- and/or fertilizer-distributing machine according to claim 6, wherein actuating means (6) are provided on the setting shaft (4) to transfer the compressive force by rotation of the setting shaft via the tension springs (3) to the sowing blades (7).

8. Seed- and/or fertilizer-distributing machine according to claims 6 and 7, wherein the first ends (3e) of the tension springs (3) are suspended on the actuating means (6).

9. Use of a tension spring as a pressure rod for applying pressure to a sowing element in a transporting position and/or reversing position against an application of tension to the sowing element by the tension springs in a working position.

## Revendications

1. Machine de répartition de semence et/ou d'engrais pour l'introduction de semence et/ou d'engrais dans un sol de champ (5) présentant les caractéristiques suivantes :
- au moins un cadre sur rails d'élément semoir (2) pour le logement de plusieurs éléments semoirs (7) reliés de façon pivotante au cadre sur rails d'élément semoir (2) et
- les éléments semoirs (7) peuvent être sollicités par des moyens de transmission d'énergie et de stockage en direction du sol de champ (5) avec une force de traction et une force de pression dirigée contre la force de traction,
**caractérisée en ce que**
les moyens de transmission d'énergie et de stockage sont formés par des ressorts de traction (3) pouvant être utilisés comme barres de pression pour le soulèvement des éléments semoirs (7).

2. Machine de répartition de semence et/ou d'engrais selon la revendication 1,
**caractérisée en ce que**
le cadre sur rails d'élément semoir (2) peut être basculé/replié à partir d'une position de travail dans une position de renversement et également dans une position de transport, les éléments semoirs (7) pouvant être sollicités dans la position de travail avec de la force de traction et dans la position de transport et/ou la position de retournement avec de la force de pression.

3. Machine de répartition de semence et/ou d'engrais selon la revendication 2,
**caractérisée en ce que**
le cadre sur rails d'élément semoir (2) est disposé dans la position de travail transversalement au sens de marche R de la machine de distribution.

4. Machine de distribution de semence et/ou d'engrais selon l'une quelconque des revendications précédentes, **caractérisée en ce qu'**un dispositif de réglage d'élément semoir (1), placé sur le cadre sur rails d'élément semoir (2), est prévu pour le réglage de la force de traction agissant sur les éléments semoirs (7) en direction du sol de champ (5) par les ressorts de traction (3).

5. Machine de répartition de semence et/ou d'engrais selon l'une quelconque des revendications précédentes, **caractérisée en ce qu'**au moins un ressort de traction (3) est prévu pour chaque élément semoir (7).

6. Machine de répartition de semence et/ou d'engrais selon l'une quelconque des revendications précédentes, **caractérisée en ce que** le dispositif de réglage d'élément semoir (1) présente un arbre de réglage (4) relié parallèlement au cadre sur rails d'élément semoir (2), sur lequel les ressorts de traction (3) sont suspendus par leur première extrémité (3e) à l'extérieur d'un axe de rotation (4a) de l'arbre de réglage (4) pour le réglage de la force de traction par rotation de l'arbre de réglage (4) autour de l'axe de rotation (4a), les ressorts de traction (3) étant accrochés, en particulier de façon rotative, à chaque fois par leur seconde extrémité (3z) sur l'élément semoir (7) correspondant.

7. Machine de distribution de semence et/ou d'engrais selon la revendication 6, **caractérisée en ce que** des moyens d'actionnement (6) sont prévus sur l'arbre de réglage (4) pour la transmission de la force de pression, par rotation de l'arbre de réglage, au moyen des ressorts de traction (3) sur le soc semoir (7).

8. Machine de répartition de semence et/ou d'engrais selon les revendications 6 et 7, **caractérisée en ce que**
les premières extrémités (3e) des ressorts de traction (3) sont suspendues sur les moyens d'actionnement (6).

9. Utilisation d'un ressort de traction comme barre de pression pour la sollicitation par pression d'un élément semoir dans une position de transport et/ou une position de retournement dans le sens contraire à une sollicitation par traction de l'élément semoir par le ressort de traction dans une position de travail.
